# EUROPEAN PATENT SPECIFICATION

(11) **EP 1 748 632 B1**
(45) Date of publication and mention of the grant of the patent: **25.08.2010**
(21) Application number: 05254772.6
(22) Date of filing: 29.07.2005
(51) Int. Cl.: H04M 1/673, H04M 1/725, H04M 11/04, G08B 13/14

(54) **Portable wireless communications device including pickpocket notification and related method**
Tragbares drahtloses Kommunikationsgerät mit Diebstahlwarnung und zugehöriges Verfahren
Terminal de communication sans fil portable avec notification du vol et procédé correspondant

(43) Date of publication of application: 31.01.2007
(73) Proprietor: RESEARCH IN MOTION LIMITED, Waterloo, Ontario N2L 3W8 (CA)
(72) Inventor: MacFarlane, David V, Ontario, N2V 2M2 (CA); Adams, Neil, Ontario, N2K 4E4 (CA)
(74) Representative: Hale, Peter

(56) References cited:
- EP-A- 1 411 709
- GB-A- 2 391 430
- US-A1- 2003 073 448
- US-A1- 2004 070 499

## Description

### Field of the Invention

The invention relates to the field of wireless communication devices, and, more particularly, to portable wireless communication devices and related methods.

### Background of the Invention

A portable wireless communication device such as a cell phone, personal digital assistant, wireless email device, pager, and the like may be carried by an owner/user on their person. A typical method for carrying such a portable device is for the owner to wear a holster on which the portable device is quick-release connected. The quick-release connection may permit the owner to easily remove the portable device from the holster. A disadvantage of the quick-release connection is that the portable device may come out of the holster through inadvertent contact with an object, or by an unauthorized person removing the portable device. In both cases, this may happen without the knowledge of the owner of the portable device. Such a loss may create numerous problems for the owner of the portable device.

For instance, the owner may have to obtain and pay for a replacement portable device. The owner may have to cancel any services enabled by the portable device, such as phone service, to prevent unauthorized charges to the owner. Additionally, there are potential problems with preventing the disclosure of the information that was stored on the portable device. For instance, portable devices have become indispensable work tools and therefore the portable device may have sensitive business information whose dissemination needs to be controlled.

Consequently, a number of schemes have been developed to address some of these potential problems. For example, U.S. Patent No. 6,674,358 to Tinsley discloses a holstered portable device that includes a sensor for determining if the portable device has been removed from the holster. If the portable device has been removed from the holster, an alert may be sounded and the alert may be deactivated by the entry of a series of keystrokes on the portable device. Similarly, U.S. Patent No. 6,836,212 to Sawinski also discloses a system that alerts a user when a portable device is removed from a holster. It further discloses that the portable device may be instructed by the alert program to transmit a stored message over a wireless channel to a user-identified target such as another wireless device carried by the user.

U.S. Patent No. 5,610,979 to Yu discloses a system that that alerts a user when a portable device is removed from a holster. The holster has a contact interface that mates with a contact interface on the portable device, and when the contact between the two contact interfaces are interrupted, an alert is generated for the user.

U.S. Patent No. 6,831,567 to Liao also discloses a holster for carrying a portable device. The holster has a receiver tuned to a circuit on the portable device, and when the portable device exceeds a certain distance from the holster, an alert is generated for the user.

### Brief Description of the Drawings

FIG. 1 is a schematic diagram of a portable wireless communications device in accordance with the invention.

FIG. 2 is a more detailed schematic diagram, partially in section, of a portion of the portable device as shown in FIG. 1.

FIG. 3 is a flow chart illustrating a method according to the invention.

FIG. 4 is a more detailed schematic block diagram of an alternate embodiment of a portable wireless communications device according to the invention.

### Detailed Description of the Preferred Embodiments

In view of the foregoing background, it is therefore an object of the invention to provide a portable device that can sense its removal from a holster and take appropriate steps if the removal was unacknowledged by the owner of the portable device.

This and other objects, features, and advantages in accordance with the invention are provided by a portable wireless communications device that may be carried by a holster and may be removable therefrom. The portable wireless communications device may include a portable housing carrying a wireless transceiver, a holster sensor, a local alert indicator, a user authentication input device, and a controller. The controller may store data and may be connected to the wireless transceiver, the holster sensor, the local alert indicator, and the user authentication input device. The controller may be switchable to a pickpocket mode for activating the local alert indicator, wirelessly sending at least one remote alert message, and rendering unusable at least a portion of the stored data upon removal from the holster unless a user authentication is input before expiration of a predetermined time. Accordingly, a portable device is provided that can sense its removal from a holster and take appropriate steps if the removal was unacknowledged by the owner of the portable device.

The local alert indicator may comprise a visible, audible, and/or vibratory alert indicator.
The user authentication input device may comprise an input keypad. The holster sensor may comprise a magnetic, electrical, optical, and/or mechanical holster sensor. The stored data may comprise stored user data and/or stored application data. The remote alert message may comprise an email remote alert message, short messenger service remote alert message, and/or a telephone call.

A method aspect of the invention is for operating a portable wireless communications device. The method may include using the controller, when in a pickpocket mode, to activate the local alert indicator upon removal of the portable housing from a holster as determined based upon the holster sensor, to wirelessly send at least one remote alert message using the wireless transceiver, and to render unusable at least a portion of the stored data unless a user authentication is input into the user authentication input device before expiration of a predetermined time.

The invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

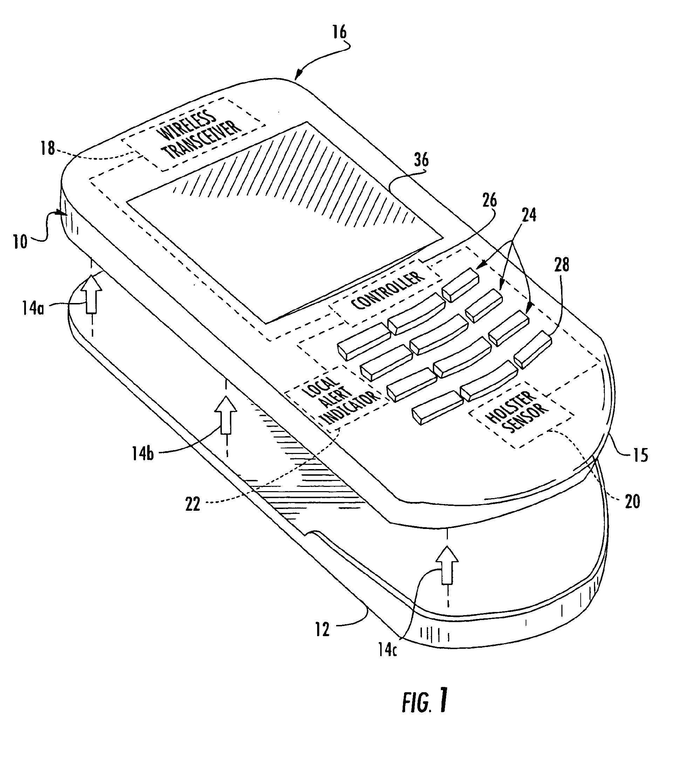

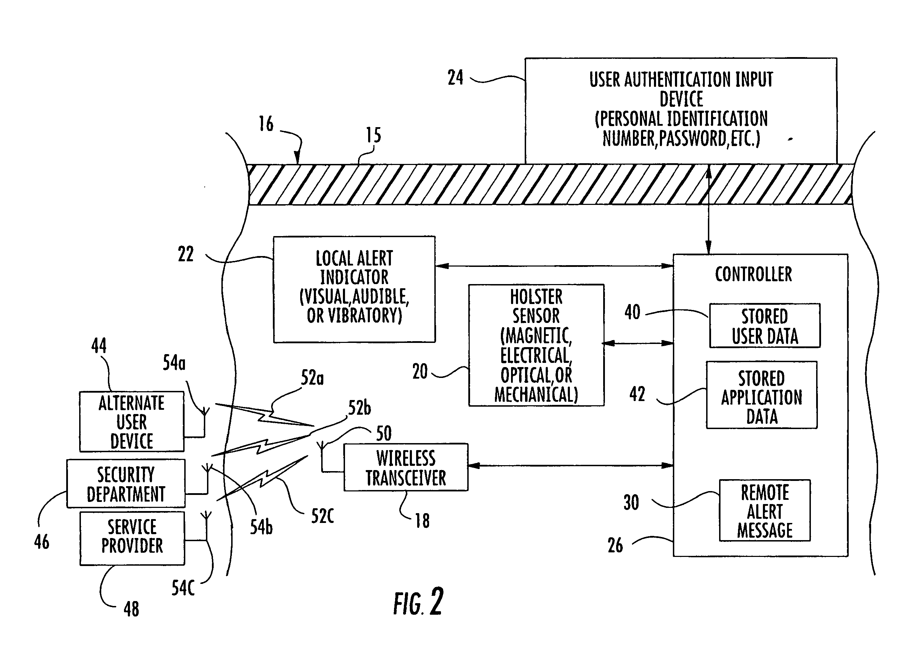

Referring initially to FIGS. 1 and 2, a portable wireless communications device **10** in accordance with the invention is now described. The portable device **10** is shown as being removed from a holster **12** following the path indicated by removal arrows **14a-14c**. The portable device **10** is readily removed and inserted into the holster **12** to facilitate convenient transport and access of the portable device by the user. As will be appreciated by those of skill in the art, the holster **12** is traditionally attached to a user's belt, trouser waistband, pocket, or the like, and the holster may come in many alternate configurations such as a partial sleeve that encloses at least a portion of the portable device **10**.

The portable device **10** illustratively includes a portable housing **16** carrying a wireless transceiver **18,** a holster sensor **20,** a local alert indicator **22,** a user authentication input device **24,** and a controller **26.** The controller **26** may store data, and is connected to the wireless transceiver **18,** the holster sensor **20,** the local alert indicator **22,** and the user authentication input device **24,** for example. The controller **26** is switchable to a pickpocket mode **28.** In the pickpocket mode **28,** the controller **26** will activate the local alert indicator **22,** wirelessly send at least one remote alert message **30,** and render unusable at least a portion of the stored data upon removal from the holster **12** unless a user authentication is input before expiration of a predetermined time. Considered in other terms, the portable device **10** can sense its removal from a holster **12** and take appropriate steps if the removal was unacknowledged by the owner of the portable device as would occur, for example, if a pickpocket surreptitiously removed the device from the user's holster in a crowded environment, such as an airport.

The controller **26** may wirelessly send a plurality of remote alert messages **30,** for example. The user authentication may be a Personal Identification Number (PIN) or a password, or the like. The authentication input device **24** may comprise an input keypad **38,** for example, which may be used to enter the PIN and/or password.

As will be appreciated by those of skill in the art, the user authentication input device **24** may further or alternately include other input devices such as biometric readers. The authentication input device **24** is illustratively shown as carried by an outer surface **15** of the portable housing **16.** The authentication input device **24** may alternately or additionally be carried within the portable housing **16** as will be appreciated by those of skill in the art.

The local alert indicator **22** may comprise a visible, audible, and/or vibratory alert indicator, for example. As will be appreciated by those of skill in the art, the visible indicator may be the flashing of one or more lights, not shown, or flashing of the display **36.** The audible local alert indicator may be a series of tones generated over a speaker, not shown, carried by the portable housing **16.** The local alert indicator **22** could also be vibration generated by a vibration unit, not shown, carried the portable housing **16.**

The holster sensor **20** may comprise a magnetic, electrical, optical, and/or mechanical holster sensor as will be appreciated by those of skill in the art. The holster sensor **20** detects changes in a monitored parameter, which the controller **26** uses to determine if the portable device **10** is carried by the holster **12,** or if the portable device 10 has been removed from the holster **12.**

The controller **26** may store data, such as stored user data **40** and/or stored application data **42,** for example. User data **40** may include personal information, such as personal financial information, work related information, or the like entered into the portable device **10.** Application data **42** may include software loaded onto the portable device **10.**

The controller **26** may generate or store the remote alert message **30** that, in turn, may comprise an email remote alert message, a short messenger service remote alert message, a telephone call message, and the like. The remote message is sent over communication links **52a-52c** using wireless transceiver antenna **50** to respective remote antennas **54a-54c** as will be appreciated by those of skill in the art. The remote alert message **30** may be sent to an alternate user device **44** such as the user's notebook computer. Alternately or additionally, the remote alert message **30** may be sent to a security department **46** such as the user's information technology department at work or an identity thief protection organization of which the user is a member. Alternately or additionally, the remote alert message 30 may be sent to a service provider **48** such as the user's phone service. Of course, in other embodiments only a single remote alert message **30** may be sent.

A method aspect of the invention is for operating the portable device **10.** The portable device **10** may comprise a portable housing **16** carrying a wireless transceiver **18,** a holster sensor **20,** a local alert indicator **22,** a user authentication input device **24,** and a controller **26** for storing data. The controller **26** may be connected to the wireless transceiver **18,** the holster sensor **20,** the local alert indicator **22,** and the user authentication input device **24.**

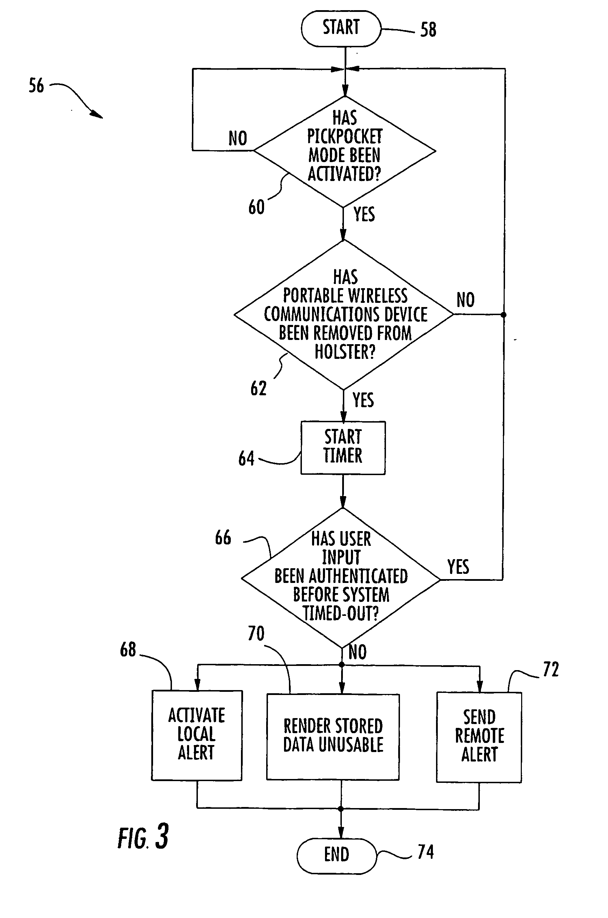

The method is now described with reference to the flowchart **56** of FIG. 3. The method begins at Block **58** where the controller **26** checks if the pickpocket mode **28** has been activated at Block **60.** The pickpocket mode **28** may be selected by the user entering an appropriate code, for example, and then placing the portable device **10** into the holster **12.** If the pickpocket mode **28** has not been entered, the controller **26** continues to monitor the portable device **10.** If the pickpocket mode **28** has been entered, the controller **26** determines if the portable device **10** has been removed from the holster **12** at Block **62.**

If the device **10** has not been removed from the holster **12,** the controller **26** continues to monitor the holster sensor **20.** If the portable device **10** has been removed from the holster **12,** the controller **26** starts a timer at Block **64.** The controller **26** then determines if a user input has been authenticated before the system timed-out at Block **66.** The predetermined time may be user selectable, such as in a range of several seconds up to several minutes, for example.

If the user input has been authenticated before the system timed-out, the controller **26** continues to monitor the portable device **10.** If the user input has not been authenticated before the system timed-out, the controller activates a local alert at Block **68,** renders user data unusable at Block **70,** and sends at least one remote alert at Block **72.** The method ends at Block **74.**

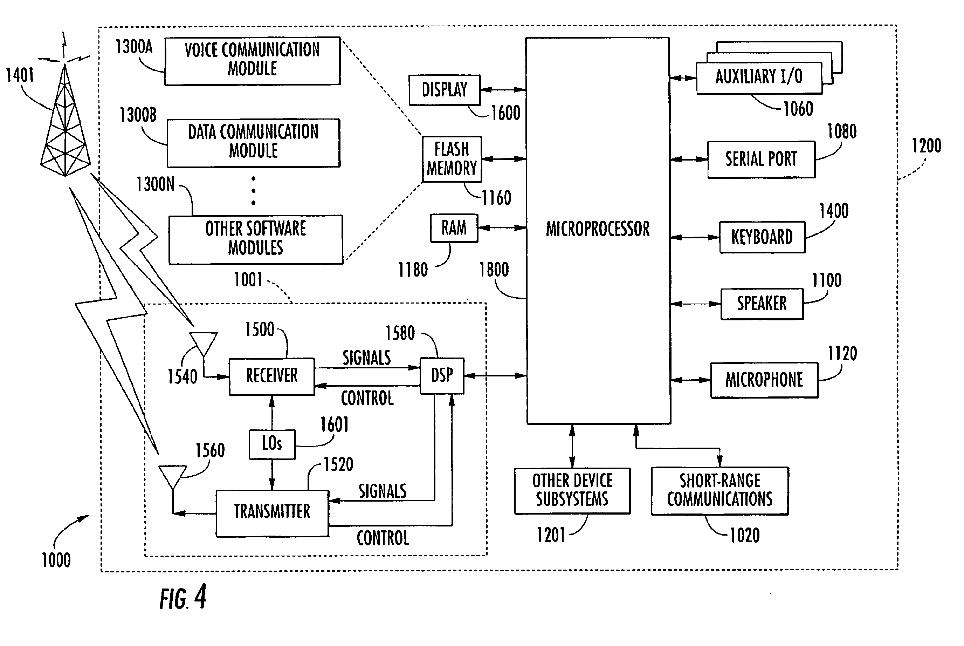

Another example of a handheld mobile wireless communications device 1000 that may be used in accordance the present invention is further described with reference to FIG. 4. The device **1000** includes a housing **1200,** a keyboard **1400** and an output device **1600.** The output device shown is a display **1600,** which is preferably a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400** by the user.

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device 1000 are shown schematically in FIG. 4. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems 1201. The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that other modifications and embodiments are intended to be included within the scope of the appended claims.

## Claims

1. A portable wireless communications device (10) to be carried by a holster (12) and being removable therefrom, the portable wireless communications device comprising a portable housing (16), a wireless transceiver (18) carried by said portable housing, a holster sensor (20) carried by said portable housing, a local alert indicator (22) carried by said portable housing, a user authentication input device (24) carried by said portable housing and a controller (26) carried by the portable housing and connected to said wireless transceiver, said holster sensor, said local alert indicator, and said user authentication input device; and **characterized in that**: said controller (26) for storing data and being switchable to a pickpocket mode for activating said local alert indicator (22), wirelessly sending at least one remote alert message (30), and rendering unusable at least a portion of the stored data upon removal from the holster (12) unless a user authentication is input before expiration of a predetermined time.

2. The portable wireless communications device (10) according to Claim 1 wherein said local alert indicator (22) comprises at least one of a visible, audible, or vibratory local alert indicator.

3. The portable wireless communications device (10) according to Claim 1 wherein said user authentication input device (24) comprises an input keypad (38).

4. The portable wireless communications device (10) according to Claim 1 wherein said holster sensor (20) comprises at least one of a magnetic, electrical, optical, or mechanical holster sensor.

5. The portable wireless communications device (10) according to Claim 1 wherein the stored data comprises at least one of stored user data (40) and stored application data (42).

6. The portable wireless communications device (10) according to Claim 1 wherein the at least one remote alert message (30) comprises at least one of an email remote alert message, short messenger service remote alert message, or a telephone call.

7. The portable wireless communications device (10) according to Claim 6 wherein the at least one remote alert message (30) comprises a plurality thereof.

8. A method for operating a portable wireless communications device (10) comprising a portable housing (16) carrying a wireless transceiver (18), a holster sensor (20), a local alert indicator (22), a user authentication input device (24), and a controller (26) for storing data, and **characterized in that** the method comprises:
using the controller (26), when in a pickpocket mode, to activate the local alert indicator (22) upon removal of the portable housing from a holster (12) as determined based upon the holster sensor, to wirelessly send at least one remote alert message (30) using the wireless transceiver, and to render unusable at least a portion of the stored data unless a user authentication is input into the user authentication input device before expiration of a predetermined time.

9. The method according to Claim 8 wherein the local alert indicator (22) comprises at least one of a visible, audible, or vibratory local alert indicator.

10. The method according to Claim 8 wherein the user authentication input device (24) comprises an input keypad (38).

11. The method according to Claim 8 wherein the holster sensor (20) comprises at least one of a magnetic, electrical, optical, or mechanical holster sensor.

12. The method according to Claim 8 wherein the stored data comprises at least one of stored user data (40) or stored application data (42).

13. The method according to Claim 8 wherein the at least one remote alert message (30), comprises at least one of an email remote alert message, short messenger service remote alert message, or a telephone call.

14. The method according to Claim 13 wherein the at least one remote alert message (30) comprises a plurality thereof.

## Patentansprüche

1. Tragbare drahtlose Kommunikationsvorrichtung (10), die durch ein Holster bzw. eine Tasche (12) getragen wird und daraus entnommen werden kann, wobei die tragbare drahtlose Kommunikationsvorrichtung (10) aufweist ein tragbares Gehäuse (16), einen drahtlosen Transceiver (18), der in dem tragbaren Gehäuse aufgenommen ist, einen Holster-Sensor (20), der in dem tragbaren Gehäuse aufgenommen ist, eine lokale Alarm-Anzeige (22), die in dem tragbaren Gehäuse aufgenommen ist, eine Benutzerauthentisierungseingabevorrichtung (24), die in dem tragbaren Gehäuse aufgenommen ist, und eine Steuervorrichtung (26), die in dem tragbaren Gehäuse aufgenommen ist und mit dem drahtlosen Transceiver, dem Holster-Sensor, der lokalen Alarm-Anzeige und der Benutzerauthentisierungseingabevorrichtung verbunden ist, und **dadurch gekennzeichnet, dass**:
die Steuervorrichtung (26) zum Speichern von Daten vorgesehen ist und in einen Taschendieb-Modus umgeschaltet werden kann zum Aktivieren der lokalen Alarm-Anzeige (22), drahtlosen Senden zumindest einer Fernalarmnachricht (30) und Unbenutzbar machen von zumindest einem Teil der gespeicherten Daten bei Herausnahme aus dem Holster (12), außer eine Benutzerauthentisierung wird vor einem Ablauf einer vorgegebenen Zeitdauer eingegeben.

2. Tragbare drahtlose Kommunikationsvorrichtung (10) gemäß Anspruch 1, wobei die lokale Alarm-Anzeige (22) zumindest eine aus einer sichtbaren, hörbaren oder vibrierenden lokalen Alarm-Anzeige aufweist.

3. Tragbare drahtlose Kommunikationsvorrichtung (10) gemäß Anspruch 1, wobei die Benutzerauthentisierungseingabevorrichtung (24) eine Eingabetastatur (38) aufweist.

4. Tragbare drahtlose Kommunikationsvorrichtung (10) gemäß Anspruch 1, wobei der Holster-Sensor (20) zumindest einen aus einem magnetischen, elektrischen, optischen oder mechanischen Holster-Sensor aufweist.

5. Tragbare drahtlose Kommunikationsvorrichtung (10) gemäß Anspruch 1, wobei die gespeicherten Daten zumindest gespeicherte Benutzerdaten (40) und/oder gespeicherte Anwendungsdaten (42) aufweisen.

6. Tragbare drahtlose Kommunikationsvorrichtung (10) gemäß Anspruch 1, wobei die zumindest eine Fernalarmnachricht (30) zumindest eine aus einer Email-Fernalarmnachricht, SMS-Fernalarmnachricht oder eines Telefonanrufs aufweist.

7. Tragbare drahtlose Kommunikationsvorrichtung (10) gemäß Anspruch 6, wobei die zumindest eine Fernalarmnachricht (30) eine Vielzahl davon aufweist.

8. Verfahren zum Betreiben einer tragbaren drahtlosen Kommunikationsvorrichtung (10), die aufweist ein tragbares Gehäuse (16), in dem aufgenommen ist ein drahtloser Transceiver (18), ein Holster-Sensor (20), eine lokale Alarm-Anzeige (22), eine Benutzerauthentisierungseingabevorrichtung (24) und eine Steuervorrichtung (26) zum Speichern von Daten, und **dadurch gekennzeichnet, dass** das Verfahren aufweist:
Verwenden der Steuervorrichtung (26), wenn in einem Taschendieb-Modus, um die lokale Alarm-Anzeige (22) zu aktivieren bei Entnahme des tragbaren Gehäuses aus einem Holster (20), wie basierend auf dem Holster-Sensor bestimmt wird, zumindest eine Fernalarmnachricht (30) unter Verwendung des drahtlosen Transceivers drahtlos zu senden, und zumindest einen Teil der gespeicherten Daten unbenutzbar zu machen, außer eine Benutzerauthentisierung wird vor einem Ablauf einer vorgegebenen Zeitdauer in die Benutzerauthentisierungseingabevorrichtung eingegeben.

9. Verfahren gemäß Anspruch 8, wobei die lokale Alarm-Anzeige (22) zumindest eine aus einer sichtbaren, hörbaren oder vibrierenden lokalen Alarm-Anzeige aufweist.

10. Verfahren gemäß Anspruch 8, wobei die Benutzerauthentisierungseingabevorrichtung (24) eine Eingabetastatur (38) aufweist.

11. Verfahren gemäß Anspruch 8, wobei der Holster-Sensor (20) zumindest einen aus einem magnetischen, elektrischen, optischen oder mechanischen Holster-Sensor aufweist.

12. Verfahren gemäß Anspruch 8, wobei die gespeicherten Daten zumindest gespeicherte Benutzerdaten (40) und/oder gespeicherte Anwendungsdaten (42) aufweisen.

13. Verfahren gemäß Anspruch 8, wobei die zumindest eine Fernalarmnachricht (30) zumindest eine aus einer Email-Fernalarmnachricht, SMS-Fernalarmnachricht oder eines Telefonanrufs aufweist.

14. Verfahren gemäß Anspruch 13, wobei die zumindest eine Fernalarmnachricht (30) eine Vielzahl davon aufweist.

## Revendications

1. Dispositif portatif de communications sans fil (10), destiné à être porté dans un étui de transport (12) et à en être retiré, le dispositif portatif de communications mobile comprenant un boîtier portatif (16), un émetteur-récepteur sans fil (18) porté par ledit boîtier portatif, un détecteur d'étui de transport (20) porté par ledit boîtier portatif, un indicateur d'alerte locale (22) porté par ledit boîtier portatif, un dispositif de saisie d'authentification par l'utilisateur (24) porté par ledit boîtier portatif et un contrôleur (26) porté par ledit boîtier portatif et connecté audit émetteur-récepteur sans fil, audit détecteur d'étui de transport, audit indicateur d'alerte locale et audit dispositif de saisie d'authentification par l'utilisateur, **caractérisé en ce que** :
ledit contrôleur (26) est destiné à mémoriser des données et peut être commuté dans un mode pickpocket afin d'activer ledit indicateur d'alerte locale (22), d'émettre sans fil au moins un message d'alerte à distance (30) et de rendre inutilisable au moins une partie des données mémorisées après extraction de l'étui de transport (12), à moins qu'une authentification de l'utilisateur ne soit saisie avant l'expiration d'une période de temps prédéterminée.

2. Dispositif portatif de communications sans fil (10) selon la revendication 1, dans lequel ledit indicateur d'alerte locale (22) comprend au moins un indicateur d'alerte locale sous forme visible, audible ou vibratoire.

3. Dispositif portatif de communications sans fil (10) selon la revendication 1, dans lequel ledit dispositif de saisie d'authentification par l'utilisateur (24) comprend un clavier de saisie (38).

4. Dispositif portatif de communications sans fil (10) selon la revendication 1, dans lequel ledit détecteur d'étui de transport (20) comprend au moins un détecteur d'étui de transport magnétique, électrique, optique ou mécanique.

5. Dispositif portatif de communications sans fil (10) selon la revendication 1, dans lequel les données mémorisées comprennent au moins des données mémorisées de l'utilisateur (40) ou des données mémorisées d'applications (42).

6. Dispositif portatif de communications sans fil (10) selon la revendication 1, dans lequel ledit au moins un message d'alerte à distance (30) comprend au moins l'un des suivants : message d'alerte à distance par courriel, message d'alerte à distance par SMS et appel téléphonique.

7. Dispositif portatif de communications sans fil (10) selon la revendication 6, dans lequel ledit au moins un message d'alerte distante (30) comprend une pluralité de ceux-ci.

8. Procédé de fonctionnement d'un dispositif portatif de communications mobile (10) comprenant un boîtier portatif (16) portant un émetteur-récepteur sans fil (18), un détecteur d'étui de transport (20), un indicateur d'alerte locale (22), un dispositif de saisie d'authentification par l'utilisateur (24) et un contrôleur (26) destiné à stocker des données, **caractérisé en ce que** le procédé comprend l'étape consistant à :
dans un mode pickpocket, utiliser le contrôleur (26) pour activer l'indicateur d'alerte locale (22) après retrait du boîtier portable d'un étui de transport (12), celui-ci étant déterminé par le détecteur d'étui de transport, pour émettre sans fil au moins un message d'alerte distante (30) à l'aide de l'émetteur-récepteur sans fil et pour rendre inutilisable au moins une partie des données mémorisées à moins qu'une authentification de l'utilisateur ne soit saisie sur le dispositif de saisie d'authentification par l'utilisateur avant l'expiration d'une période de temps prédéterminée.

9. Procédé selon la revendication 8, dans lequel l'indicateur d'alerte locale (22) comprend au moins un indicateur d'alerte locale sous forme visible, audible ou vibratoire.

10. Procédé selon la revendication 8, dans lequel le dispositif de saisie d'authentification par l'utilisateur (24) comprend un clavier de saisie (38).

11. Procédé selon la revendication 8, dans lequel le détecteur d'étui de transport (20) comprend au moins un détecteur d'étui de transport magnétique, électrique, optique ou mécanique.

12. Procédé selon la revendication 8, dans lequel les données mémorisées comprennent au moins des données mémorisées de l'utilisateur (40) ou des données mémorisées d'applications (42).

13. Procédé selon la revendication 8, dans lequel ledit au moins un message d'alerte à distance (30) comprend au moins l'un des suivants : message d'alerte à distance par courriel, message d'alerte à distance par SMS et appel téléphonique.

14. Procédé selon la revendication 13, dans lequel ledit au moins un message d'alerte distante (30) comprend une pluralité de ceux-ci.
